# EUROPÄISCHE PATENTANMELDUNG

(11) **EP 2 998 172 A1**
(43) Veröffentlichungstag der Anmeldung: **23.03.2016**
(21) Anmeldenummer: 15185683.8
(22) Anmeldetag: 17.09.2015
(51) Int. Cl.: B60T 7/20, B60T 8/17

(54) **VERFAHREN ZUR BREMSUNG EINES ANHÄNGERS**

(30) Priorität: 19.09.2014 DE 102014218888
(71) Anmelder: Deere & Company, Moline, IL 61265 (US)
(72) Erfinder: Flörchinger, Thomas, 68165 Mannheim (DE); Reinards, Marco, 67269 Grünstadt (DE); Schott, Florian, 36325 Feldatal (DE); Müller, David, 76297 Stutensee (DE)
(74) Vertreter: Reichert, Christian

(57) **Zusammenfassung**

Die Erfindung betrifft ein Verfahren zur Bremsung eines Anhängers in einem Zugfahrzeug-Anhänger-Gespann, bei dem eine Fahrachse (44) des Anhängers (40) zur Übertragung eines Bremsmoments auf die befahrene Bodenoberfläche angesteuert wird, solange ein kontinuirlich erfasster Istwert einer Motordrehzahl einen bei einer Betätigung einer Vortriebssteuereinrichtung (24) zur Erhöhung der Übersetzung einer Getriebevorrichtung (16) des Zugfahrzeugs erfassten Sollwert einer Motordrehzahl übersteigt.

## Beschreibung

Die Erfindung betrifft ein Verfahren zur Bremsung eines Anhängers in einem Zugfahrzeug-Anhänger-Gespann, wobei das Zugfahrzeug einen Fahrantriebsstrang und eine in dem Fahrantriebsstrang angeordnete Getriebevorrichtung und eine eine Übersetzung der Getriebevorrichtung beeinflussende Vortriebssteuereinrichtung und der Anhänger zumindest eine Fahrachse umfasst, über die durch Ansteuerung über das Zugfahrzeug zumindest ein Bremsmoment auf eine befahrene Bodenoberfläche übertragen werden kann.

Regelmäßig weisen Zugfahrzeug-Anhänger-Gespanne, wobei das Zugfahrzeug insbesondere ein Traktor sein kann, Bremssysteme auf, bei denen ein pneumatisches Anhängerbremsventil hydraulisch über den Traktor angesteuert wird, wenn das Bremspedal des Traktors betätigt wird. Bei einer Bremsung des Gespanns sind der Zeitpunkt der Bremsaktuierung am Anhänger und die Bremskraft bzw. das erzeugte Bremsmoment am Anhänger relevant für die Fahrstabilität des Gespanns. Da der Traktor und der Anhänger über die Anhängerkupplung miteinander verbunden sind, kommt es zu einem Aufschieben des Anhängers auf den Traktor, wenn die Bremse des Traktors früher anspricht oder deren Bremskraft größer als die der Bremse des Anhängers ist. Ein derartiger Fahrzustand kann der Fahrstabilität des Gespanns abträglich sein.

In der jüngeren Vergangenheit kommen in Traktoren vermehrt stufenlos schaltbare oder automatisiert schaltbare Getriebe zum Einsatz, bei denen sich der Traktor allein durch Verstellen eines Fahrhebels verzögern lässt. Ein Verstellen des Fahrhebels in einer der beiden möglichen Richtungen bewirkt eine Änderung der Getriebeübersetzung hin zu einer größeren Übersetzung, so dass ein größeres Motorbremsmoment zu einem größeren Bremsmoment an der Antriebsachse führt. Da bei dieser Bremsung weder die Bremsen des Traktors noch des Anhängers betätigt werden, also lediglich das Motorbremsmoment über die Antriebsachse des Traktors wirksam ist, erfolgt ein Aufschieben des Anhängers auf den Traktor mit möglicherweise negativen Folgen für die Fahrstabilität des Gespanns.

Hierzu schlägt die DE 10 2005 002 699 A1 einen im Bereich der Kupplung des Traktors oder des Anhängers angeordneten Auflaufsensor vor, der ein elektrisches Signal erzeugt, das bei einer Bremsung des Traktors mittels des Fahrhebels eine durch den Anhänger erzeugte Auflaufkraft repräsentiert. In Anhängigkeit von der Stärke des Signals werden die Bremsen des Anhängers über ein Bremsventil betätigt. Prinzipiell handelt es sich hierbei um eine mechanisch arbeitende Auflaufbremse, mit dem Nachteil, dass prinzipbedingt der Anhänger zunächst auf das Zugfahrzeug auflaufen muss, bevor die Notwendigkeit einer Anhängerbremsung sensiert werden kann.

Ausgehend hiervon besteht die Aufgabe der vorliegenden Erfindung darin ein Verfahren bereitzustellen, mit dem eine verbesserte Anhängerbremsung erreicht werden kann.

Die Aufgabe wird gelöst durch ein Verfahren zur Bremsung eines Anhängers in einem Zugfahrzeug-Anhänger-Gespann, wobei das Zugfahrzeug einen Fahrantriebsstrang und eine in dem Fahrantriebsstrang angeordnete Getriebevorrichtung und eine eine Übersetzung der Getriebevorrichtung beeinflussende Vortriebssteuereinrichtung und der Anhänger zumindest eine Fahrachse umfasst, über die durch Ansteuerung über das Zugfahrzeug zumindest ein Bremsmoment auf eine befahrene Bodenoberfläche übertragen werden kann, bei dem die Fahrachse des Anhängers zur Übertragung eines Bremsmoments auf die befahrene Bodenoberfläche angesteuert wird, solange ein kontinuierlich erfasster Istwert einer Motordrehzahl einen bei einer Betätigung der Vortriebssteuereinrichtung zur Erhöhung der Übersetzung der Getriebevorrichtung erfassten Sollwert einer Motordrehzahl übersteigt.

Hierbei wird unter Vortriebssteuereinrichtung der Fahrhebel verstanden, mit dem eine Übersetzung der Getriebevorrichtung eingestellt werden kann. Weiterhin kann die Getriebevorrichtung teil eines sogenannten Motor-Getriebe-Management-Systems sein, über das Parameter wie beispielsweise die Motordrehzahl voreingestellt werden können, so dass ein voreingestelltes Drehzahlniveau von einer Regelung zumindest weitestgehend konstant gehalten wird.

Durch das erfindungsgemäße Verfahren wird eine Steuerung bereitgestellt, die ein Bremsmoment, das ein Anhänger über seine Fahrachse auf die befahrene Bodenoberfläche aufbringt, in Abhängigkeit der Position des Fahrhebels und der Motordrehzahl des Zugfahrzeugs steuert. Durch eine gezielte Steuerung der Verzögerung des Anhängers wird ein Schieben des Traktors durch den Anhänger vermieden bzw. reduziert, um so die Fahrstabilität zu erhöhen. Wenn die Bedienperson des Traktors durch Verstellen des Fahrhebels das Gespann verzögert, wird während des Verzögerungsvorgangs der Anhänger ebenfalls aktiv abgebremst bzw. verzögert.

Bevorzugt wird ein Istwert einer eine Motorlast einer Verbrennungskraftmaschine des Fahrantriebsstrangs charakterisierende Zustandsgröße über eine elektronische Kontrolleinheit des Zugfahrzeugs erfasst, solange der Istwert einer Motordrehzahl den Sollwert einer Motordrehzahl übersteigt. Hierdurch wird noch ein zusätzliches Entscheidungskriterium für eine Ansteuerung der Fahrachse zur Übertragung eines Bremsmoments bereitgestellt. Bevorzugt wird die Fahrachse des Anhängers zur Übertragung eines Bremsmoments angesteuert, solange die die Motorlast charakterisierende Zustandsgröße einen Schwellenwert unterschreitet.

Bevorzugt werden eine Betätigungsstellung der Vortriebssteuereinrichtung und die Motordrehzahl über eine elektronische Kontrolleinheit des Zugfahrzeugs erfasst. Hier sind die Betätigungsstellung und die Motordrehzahl über die Kontrolleinheit in einem CAN-Bussystem verfügbar, in dem die Kontrolleinheit regelmäßig eingebunden ist.

Bevorzugt handelt es sich bei der Getriebevorrichtung des Zugfahrzeug um ein stufenlos schaltbares oder ein automatisiert schaltbares Getriebe. Derartige Getriebe sind einfach in ein Motor-Getriebe-Management-System zu integrieren. Alternativ kann es sich bei der Getriebevorrichtung auch um ein Schaltgetrieben mit manuellen Schaltvorgängen handeln. Wenn die Bedienperson bei der Bergabfahrt zurückschaltet schiebt der Anhänger und die Motordrehzahl erhöht sich. In diesem Fall kann die Fahrachse des Anhängers zur Übertragung eines Bremsmoments angesteuert, so dass die Fahrstabilität erhöht wird.

Bevorzugt kommt das erfindungsgemäße Verfahren bei einer ersten Ausführungsform zur Anwendung, bei der die Fahrachse des Anhängers eine über das Zugfahrzeug ansteuerbare Betriebsbremseinrichtung umfasst, um ein Bremsmoment auf eine befahrene Bodenoberfläche zu übertragen. Hierbei wird in der Betriebsbremseinrichtung ein Bremsdruck angesteuert, der ein Bremsmoment an der Fahrachse bewirkt.

Bevorzugt ist die Betriebsbremseinrichtung pneumatisch betätigt. Dies ist die vorherrschende Betätigungsart bei Anhängerbremsen und somit leicht in den erfindungsgemäßen Verfahrensablauf zu integrieren. Alternativ kann die Betriebsbremseinrichtung auch hydraulisch, elektrisch, mechanisch oder durch Kombinationen hiervon betrieben werden.

Bevorzugt kommt das erfindungsgemäße Verfahren bei einer alternativen Ausführungsform zur Anwendung, bei der es sich bei der Fahrachse des Anhängers um eine elektrisch angetriebene oder eine hydraulisch angetriebene Triebachse handelt. Hierdurch kann in einfacher Weise ein Bremsmoment auf die Fahrachse aufgebracht werden, indem ein entgegensetzt gerichtetes Antriebsmoment über den elektrischen Antrieb oder den hydraulischen Antrieb aufgebracht wird.

Bevorzugt wird aus einer Differenz von Istwert zu Sollwert der Motordrehzahl ein anzusteuerndes Bremsmoment der Fahrachse des Anhängers ermittelt. Weiterhin ist bevorzugt, dass das anzusteuernde Bremsmoment über einen Proportional-Integral-Regler ermittelt wird.

Die Erfindung wird nachfolgend anhand der beigefügten Figuren beschrieben. Hierin zeigen
- Figur 1: ein Zugfahrzeug-Anhänger-Gespann und
- Figur 2: ein Ablaufdiagramm des erfindungsgemäßen Verfahrens zur Bremsung eines Anhängers.

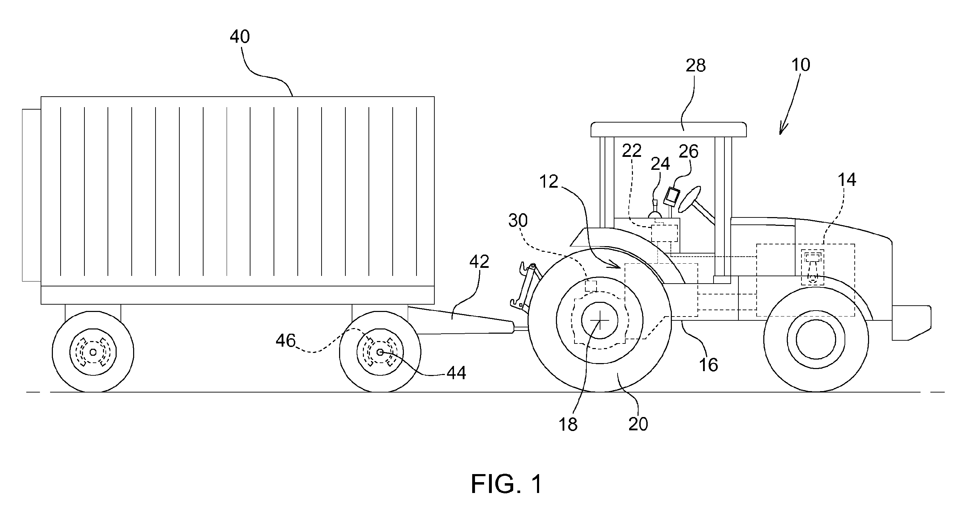

Die Figur 1 zeigt ein Zugfahrzeug 10 in Gestalt eines Traktors, der über eine kuppelbare Zugdeichsel 42 mit einem Anhänger 40 verbunden ist. Das Zugfahrzeug 10 umfasst einen Fahrantriebsstrang 12 bestehend aus einer Verbrennungskraftmaschine 14, einer Getriebevorrichtung 16 und einer Antriebsachse 18 mit Antriebsrädern 20. Ferner ist eine elektronische Kontrolleinheit 22 vorgesehen, die mit der Verbrennungskraftmaschine 14, der Getriebevorrichtung 16, einer Vortriebssteuereinrichtung 24 und einem Eingabebedienelement 26 in einer Steuerungsverbindung steht. Die Vortriebssteuereinrichtung 24 und das Eingabebedienelement 26 sind in einer Kabine 28 im Zugriffsbereich einer sich dort aufhaltenden Bedienperson angeordnet. Die Vortriebssteuereinrichtung 24 ist in Form eines Fahrhebels ausgeführt, mit dem durch die Bedienperson eine Übersetzung der Getriebevorrichtung 16 gewählt werden kann, was nachfolgend näher erläutert wird.

Die Verbrennungskraftmaschine 14, die Getriebevorrichtung 16, die elektronische Kontrolleinheit 22, der Fahrhebel 24 und das Eingabebedienelement 26 können als Teil eines Motor-Getriebe-Management-Systems begriffen werden, über das diverse den Fahrantriebsstrang 12 betreffende Einstellungen gemacht und vorausgewählt werden können. So kann beispielsweise über das Eingabebedienelement 26 eine Motordrehzahl ausgewählt werden, so dass die Verbrennungskraftmaschine 14 bis zur Einstellung einer geänderten Motordrehzahl mit der ausgewählten Drehzahl läuft. Über den Fahrhebel 24 kann die Bedienperson nun mittelbar über eine Verstellung der Übersetzung der Getriebevorrichtung 16 eine Fahrgeschwindigkeit auswählen bzw. diese beeinflussen. Hat die Bedienperson demnach eine Motordrehzahl ausgewählt, so dass sich der Traktor bei einer gegebenen Betätigungsstellung des Fahrhebels 24 mit entsprechender Fahrgeschwindigkeit bewegt, kann die Bedienperson durch Änderung der Betätigungsstellung des Fahrhebels 24 und damit durch Änderung der Übersetzung der Getriebevorrichtung 16 ein Änderung der Fahrgeschwindigkeit des Traktors 10 bewirken. Im Kontext dieser Beschreibung steht eine Reduzierung der Fahrgeschwindigkeit des Traktors 10 beziehungsweise des Traktor-Anhänger-Gespanns im Vordergrund, die dadurch erreicht wird, dass bei konstant gehaltener Motordrehzahl der Fahrhebel 24 in eine Betätigungsstellung gebracht wird, die einer größeren Übersetzung der Getriebevorrichtung 16 entspricht. Hierdurch wird ausgehend von der Verbrennungskraftmaschine 14 ein Motorbremsmoment über die Getriebevorrichtung 16 und die Antriebsachse 18 auf die Antriebsräder 20 übertragen, so dass eine Bremsung des Traktors 10 beziehungsweise des Traktor-Anhänger-Gespanns erfolgt.

Der Anhänger 40 umfasst zumindest eine Fahrachse 44 und kann wie vorliegend beispielhaft beschrieben als Ladewagen ausgeführt sein. Hierbei kann der Ladewagen in einer ersten Ausführungsform mit einer Betriebsbremseinrichtung 46 ausgestattet sein. Die Betriebsbremseinrichtung 46 kann als pneumatisch betätigbare Anlage ausgeführt sein. Die Betriebsbremseinrichtung 46 ist überwiegend im Bereich einer Fahrachse 44 angeordnet und kann in bekannter Weise aufgebaut sein. Es kann eine weitere Fahrachse vorgesehen sein. Im Bereich der weiteren Fahrachse kann eine weitere Betriebsbremseinrichtung angeordnet sein. Insbesondere können Bremszylinder vorgesehen sein, in denen pneumatisch ein Bremsdruck erzeugt werden kann, so dass in den Bremszylindern einsitzende Bremskolben Reibbeläge gegen eine Reibfläche in einer Bremstrommel oder auf einer Bremsscheibe beaufschlagen. In der Folge überträgt die Fahrachse 44 ein Bremsmoment auf die momentan befahrene Bodenoberfläche, so dass eine Verzögerung auf den Anhänger 40 wirkt.

Zur Ansteuerung der Betriebsbremseinrichtung 46 des Anhängers 40 ist ein über die elektronische Kontrolleinheit 22 elektrisch ansteuerbares Anhängerbremsventil 30 auf dem Traktor 10 vorgesehen. Durch das elektrisch ansteuerbare Anhängerbremsventil 30 ist die Möglichkeit gegeben, die Betriebsbremseinrichtung 46 des Anhängers 40 unabhängig von einer Betriebsbremseinrichtung des Traktors 10 anzusteuern und den Bremsdruck in der Betriebsbremseinrichtung 46 des Anhängers 40 dynamisch anzupassen.

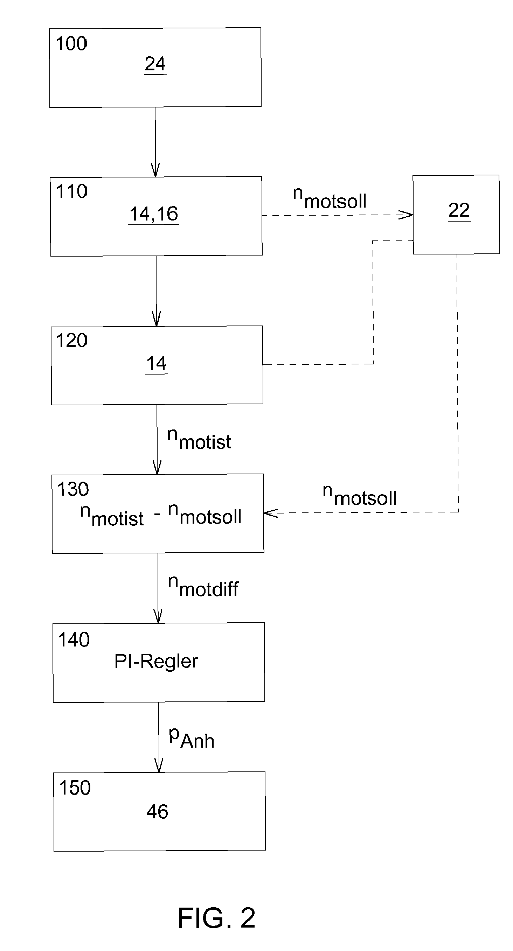

Das erfindungsgemäße Verfahren zur Bremsung eines Anhängers in einem Zugfahrzeug-Anhänger-Gespann ist in seinem Ablauf in der Figur 2 gezeigt und kommt dann zur Anwendung, wenn die Bedienperson ohne Betätigung der Betriebsbremseinrichtung des Traktors 10 über den Fahrhebel 24 eine höhere Übersetzung zur Bremsung des Gespanns einstellt. In dem Verfahrensschritt 100 bewegt die Bedienperson während der Fahrt des Gespanns den Fahrhebel 24 in Richtung einer größeren Übersetzung der Getriebevorrichtung 16. In dem Verfahrensschritt 110 wird die aktuelle Motordrehzahl nₘₒₜₛₒₗₗ der Verbrennungskraftmaschine 14 als Sollwert berechnet und in der elektronischen Kontrolleinheit 22 gespeichert. Als Folge der Änderung der Übersetzung der Getriebevorrichtung 16 verzögert der Traktor 10 und der Anhänger 40 läuft auf den Traktor 10 auf. Durch das Aufschieben des Anhängers 40 auf den Traktor 10 erhöht sich während der Verzögerung die Motordrehzahl der Verbrennungskraftmaschine 14. In Verfahrensschritt 120 wird der Verlauf der aktuellen Motordrehzahl nₘₒₜᵢₛₜ kontinuierlich von der elektronischen Kontrolleinheit 22 als Istwert erfasst und in Verfahrensschritt 130 ein Differenzwert n_{motdiff} zu dem Sollwert der Motordrehzahl nₘₒₜₛₒₗₗ berechnet. Der Differenzwert n_{motdiff} aus Sollwert und Istwert der Motordrehzahl nₘₒₜₛₒₗₗ, nₘₒₜᵢₛₜ wird in Verfahrensschritt 140 einem Proportional-Integral-Regler zugeführt. Der Proportional-Integral-Regler berechnet ausgehend von dem Differenzwert n_{motdiff} der Drehzahlen einen pneumatischen Bremsdruck p_{Anh} der Betriebsbremseinrichtung 46 des Anhängers 40, der wirksam sein muss, um ein Aufschieben des Anhängers 40 auf den Traktor 10 zu vermeiden oder zumindest zu verringern. Mit diesem berechneten Bremsdruck p_{Anh} wird in Verfahrensschritt 150 die Betriebsbremseinrichtung 46 des Anhängers 40 angesteuert. Sobald der Differenzwert n_{motdiff} der Drehzahlen auf Null abgefallen ist, wird die Betriebsbremseinrichtung 46 des Anhängers 40 nicht mehr mit einem Bremsdruck angesteuert.

In einer zweiten Ausführungsform kann der Anhänger 40, der auch hier als Ladewagen ausgeführt sein kann, über eine elektrisch angetriebene oder hydraulisch angetriebene Triebachse als Fahrachse 44 verfügen. Regelmäßig verfügt eine derartige Triebachse nicht über ein separates Betriebsbremssystem. Vielmehr kann bei derartigen Triebachsen ein Bremsmoment auf die momentan befahrene Bodenoberfläche übertragen werden, indem die Triebachse ein entgegengesetztes Antriebsmoment bezogen auf die momentane Bewegungsrichtung aufbringt.

### Bezugszeichenliste

- 10: Zugfahrzeug
- 12: Fahrantriebsstrang
- 14: Verbrennungskraftmaschine
- 16: Getriebevorrichtung
- 18: Antriebsachse
- 20: Antriebsrad
- 22: elektronische Kontrolleinheit
- 24: Vortriebssteuereinrichtung
- 26: Eingabebedienelement
- 28: Kabine
- 30: Anhängerbremsventil
- 40: Anhänger
- 42: Zugdeichsel
- 44: Fahrachse
- 46: Betriebsbremseinrichtung

## Patentansprüche

1. Verfahren zur Bremsung eines Anhängers (40) in einem Zugfahrzeug-Anhänger-Gespann (10, 40),
wobei das Zugfahrzeug (10) einen Fahrantriebsstrang (12) und eine in dem Fahrantriebsstrang (12) angeordnete Getriebevorrichtung (16) und eine eine Übersetzung der Getriebevorrichtung (16) beeinflussende Vortriebssteuereinrichtung (24) und der Anhänger (40) zumindest eine Fahrachse (44) umfasst, über die durch Ansteuerung über das Zugfahrzeug (10) zumindest ein Bremsmoment auf eine befahrene Bodenoberfläche übertragen werden kann, bei dem
die Fahrachse (44) des Anhängers (40) zur Übertragung eines Bremsmoments auf die befahrene Bodenoberfläche angesteuert wird, solange ein kontinuierlich erfasster Istwert einer Motordrehzahl einen bei einer Betätigung der Vortriebssteuereinrichtung (24) zur Erhöhung der Übersetzung der Getriebevorrichtung (16) erfassten Sollwert einer Motordrehzahl übersteigt.

2. Verfahren zur Bremsung nach Anspruch 1, **dadurch gekennzeichnet, dass** ein Istwert einer eine Motorlast einer Verbrennungskraftmaschine (14) des Fahrantriebsstrangs (12) charakterisierende Zustandsgröße über eine elektronische Kontrolleinheit (22) des Zugfahrzeugs (10) erfasst wird, solange der Istwert einer Motordrehzahl den Sollwert einer Motordrehzahl übersteigt.

3. Verfahren zur Bremsung nach Anspruch 2, **dadurch gekennzeichnet, dass** die Fahrachse (44) des Anhängers (40) zur Übertragung eines Bremsmoments angesteuert wird, solange die die Motorlast charakterisierende Zustandsgröße einen Schwellenwert unterschreitet.

4. Verfahren zur Bremsung nach einem der Ansprüche 1 bis 3, **dadurch gekennzeichnet, dass** eine Betätigungsstellung der Vortriebssteuereinrichtung (24) und die Motordrehzahl über eine elektronische Kontrolleinheit (22) des Zugfahrzeugs (10) erfasst werden.

5. Verfahren zur Bremsung nach einem der Ansprüche 1 bis 4, **dadurch gekennzeichnet, dass** es sich bei der Getriebevorrichtung (16) des Zugfahrzeug (10) um ein stufenlos schaltbares oder ein automatisiert schaltbares Getriebe handelt.

6. Verfahren zur Bremsung nach einem der Ansprüche 1 bis 5, **dadurch gekennzeichnet, dass** die Fahrachse (44) des Anhängers (40) eine über das Zugfahrzeug (10) ansteuerbare Betriebsbremseinrichtung (46) umfasst, um ein Bremsmoment auf eine befahrene Bodenoberfläche zu übertragen.

7. Verfahren zur Bremsung nach Anspruch 6, **dadurch gekennzeichnet, dass** die Betriebsbremseinrichtung (46) pneumatisch betätigt ist.

8. Verfahren zur Bremsung nach einem der Ansprüche 1 bis 5, **dadurch gekennzeichnet, dass** es sich bei der Fahrachse (44) des Anhängers (40) um eine elektrisch angetriebene oder eine hydraulisch angetriebene Triebachse handelt.

9. Verfahren zur Bremsung nach einem der Ansprüche 1 bis 8, **dadurch gekennzeichnet, dass** aus einer Differenz von Istwert zu Sollwert der Motordrehzahl ein anzusteuerndes Bremsmoment der Fahrachse (44) des Anhängers (40) ermittelt wird.

10. Verfahren zur Bremsung nach Anspruch 9, **dadurch gekennzeichnet, dass** das anzusteuernde Bremsmoment über einen Proportional-Integral-Regler ermittelt wird.
